# EUROPEAN PATENT SPECIFICATION

(11) **EP 1 484 634 B1**
(45) Date of publication and mention of the grant of the patent: **17.01.2007**
(21) Application number: 04102522.2
(22) Date of filing: 04.06.2004
(51) Int. Cl.: G02F 1/1343, G02F 1/155, E06B 9/24

(54) **Electrically controllable light transmission panel, and relative control method**
Elektrisch steuerbare Lichttransmissionstafel, und Methode für dessen Steuerung
Panneau de lumière à transmission contrôlable électriquement, et méthode de contrôle associée

(30) Priority: 06.06.2003 IT TO20030427
(43) Date of publication of application: 08.12.2004
(73) Proprietor: C.R.F. Società Consortile per Azioni, 10043 Orbassano (Torino) (IT)
(72) Inventor: Lugara, Emanuele, Strada Torino, 50 10043 Orbassano (IT)
(74) Representative: Jorio, Paolo

(56) References cited:
- US-A- 3 675 988
- US-A- 4 106 858
- US-A- 4 139 278

## Description

The present invention relates to an electrically controllable light transmission panel, in particular for manufacturing glazing, such as windscreens, windows, roofs, partitions, for the building industry and passenger and freight vehicles, and to a relative control method.

As is known, the light transmission coefficient of a body is defined by the ratio between the intensity of a light beam transmitted through the body, and the intensity of the corresponding incident beam, and, for certain materials, depends, not only on geometric parameters and on the wavelength of the incident radiation, but also on other conditions, such as the presence of an electric field. Such is the case, for example, of electrochromic or liquid crystal materials, which may be used to advantage for making controlled transmission coefficient panels.

Such panels, also known as variable light transmission panels, normally comprise a sensitive layer of electrochromic or liquid crystal material, the surfaces of which are coated with electrically conductive coatings permeable to visible radiation. More specifically, the coatings are supported on flexible, transparent, e.g. PET, films applied to opposite surfaces of the sensitive layer; the structure formed by the sensitive layer and by the transparent films with the conductive coatings is laminated between outer supporting layers of plastic or glass material, using transparent adhesive layers; and bias electrodes are glued to the transparent films and are electrically connected to the respective conductive coatings. In other words, the conductive coatings are coupled capacitively to each other, and form a capacitor in which the sensitive layer acts as the dielectric. By imposing a voltage difference between the conductive coatings via the electrodes, an electric field is formed inside the sensitive layer. As the intensity of the electric field increases, the transmission coefficient of the sensitive layer varies gradually between values corresponding to a substantially fully dimmed condition (about 0) and a transparent condition (close to 1) or vice versa, depending on the type of material used for the sensitive layer. By controlling the voltage difference between the electrodes, and, in certain cases, also the direction of the field for certain types of sensitive materials, the transmission coefficient of the sensitive layer can also be controlled.

In the actual use of variable light transmission panels, it is best not only to uniformly control the transmission coefficient value, but also to vary the bias conditions of the conductive coatings to create a spatial gradient of the electric field within the sensitive material. By so doing, the opacity of the panel can be graded in one or more directions to achieve a so-called "curtain effect".

To this end, various solutions have been proposed, none of which, however, is altogether satisfactory. In a first solution, the conductive coatings are applied to the opposite surfaces of the sensitive layer to define a number of facing stripes. In other words, each pair of facing stripes forms a capacitor controllable separately and independently of the others. One drawback of this type of variable light transmission panel obviously lies in the transmission coefficient being only discretely variable, e.g. in steps, but not homogeneously. In other words, as opposed to a gradual shading, the effect obtainable on the panel is a succession of adjacent stripes, each having a respective transmission coefficient value. Between the stripes, which correspond to respective capacitors, breaks are perceivable which disturb the vision and are particularly hazardous when the variable light transmission panel is incorporated in a vehicle window. Moreover, the transmission coefficient is only variable in one direction perpendicular to the extension direction of the capacitors, and manufacture is fairly complex (in fact, separate electrodes and bias means must be provided for each capacitor).

In another known solution, the sensitive layer varies (increases) in thickness in a predetermined direction, so that the distance between the conductive coatings is not constant. The intensity of the electric field within the sensitive layer, however, is in fact related to the distance between the conductive coatings. Moreover, voltage is uniform in each of the conductive coatings, through which no current flows in normal (steady) operating conditions, so that the electric field and the transmission coefficient are determined by the thickness of the sensitive layer: in other words, as thickness increases, the intensity of the electric field and the transmission coefficient decrease. Using a sensitive layer of increasing thickness, the transmission coefficient can therefore be varied gradually to achieve the desired curtain effect. In this case too, however, manufacture of the panel is fairly complex, by requiring extremely accurate control of the thickness of the sensitive layer. Moreover, the direction in which the transmission coefficient varies cannot be altered.

US-A- 4 139 278 discloses an electrically controllable light transmission panel and a control method thereof, which have the features recited in the preambles of claims 1 to 13, respectively.

It is an object of the present invention to provide a variable light transmission panel designed to eliminate the aforementioned drawbacks.

According to the present invention, an electrically controllable light transmission panel and relative control method are provided, as claimed in Claims 1 and 13 respectively.

A number of non-limiting embodiments of the present invention will be described by way of example with reference to the accompanying drawings, in which:
Figure 1 shows a simplified block diagram of a variable light transmission panel in accordance with the present invention;
Figure 2 shows a light transmission coefficient graph relative to the Figure 1 panel;
Figure 3 shows a more detailed block diagram of the Figure 1 panel;
Figure 4 shows an equivalent circuit diagram relative to the Figure 1 panel;
Figures 5 and 6 show graphs of quantities relative to the Figure 1 panel in different operating conditions;
Figure 7 shows a block diagram of a second embodiment of a variable light transmission panel in accordance with the present invention;
Figure 8 shows an equivalent circuit diagram relative to a variable light transmission panel;
Figure 9 shows a graph of quantities relative to the Figure 8 panel.

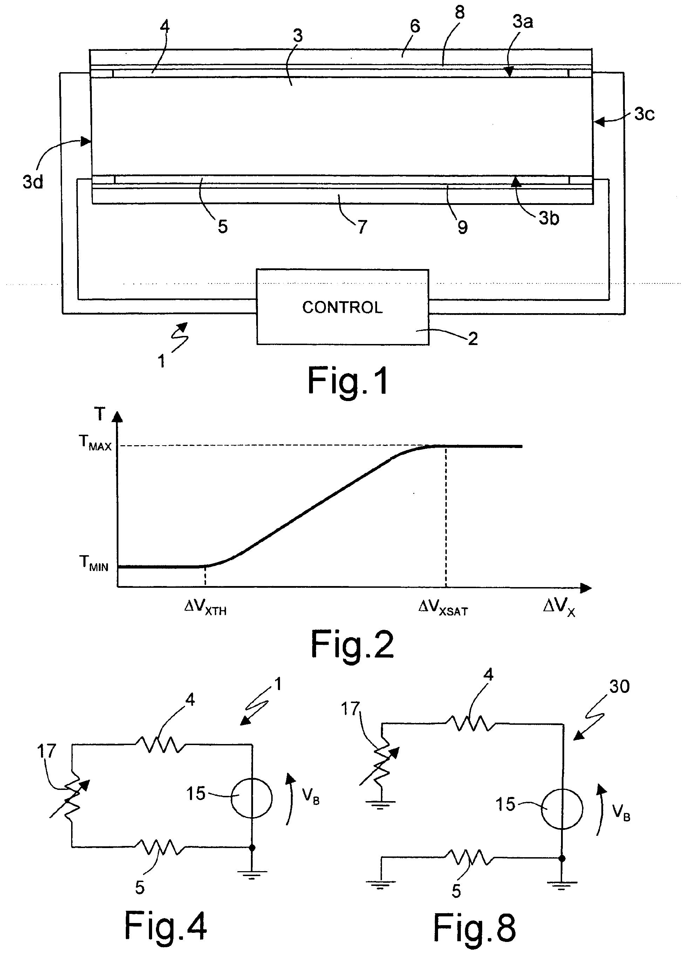

With reference to Figure 1, a variable light transmission panel 1 has a light transmission control device 2, and comprises a sensitive, variable light transmission layer 3; and a first and second coating 4, 5 covering respective opposite faces 3a, 3b of sensitive layer 3. Sensitive layer 3 and coatings 4, 5 are laminated in glass or plastic supporting layers 6, 7, with transparent adhesive layers 8, 9, e.g. of polyvinyl butyral (PVB) or polyurethane (PU). Sensitive layer 3 is made of a material having an electrically controllable light transmission coefficient T (Figure 2), such as an electrochromic or liquid crystal material. That is, the light transmission coefficient of sensitive layer 3 is controllable by applying a voltage between opposite faces 3a, 3b. The Figure 2 graph shows transmission coefficient T alongside variations in a voltage drop ΔV_{X} between facing points of faces 3a, 3b. As can be seen, transmission coefficient T varies between a minimum value T_{MIN} (about 0) and a maximum value T_{MAx} (close to 1) substantially linearly alongside an increase in voltage drop AV_{X}. More specifically, when voltage drop AV_{X} exceeds a threshold value ΔV_{XTH}, transmission coefficient T begins to rise, and reaches maximum value T_{MAX} when voltage drop ΔV_{X} reaches a saturation value ΔV_{XSAT}.

First and second coating 4, 5 (Figure 1) are electrically conductive and permeable to visible light, are preferably formed on films of flexible plastic material, such as polyethylene terephthalate (PET), and are preferably of predetermined uniform resistivity.

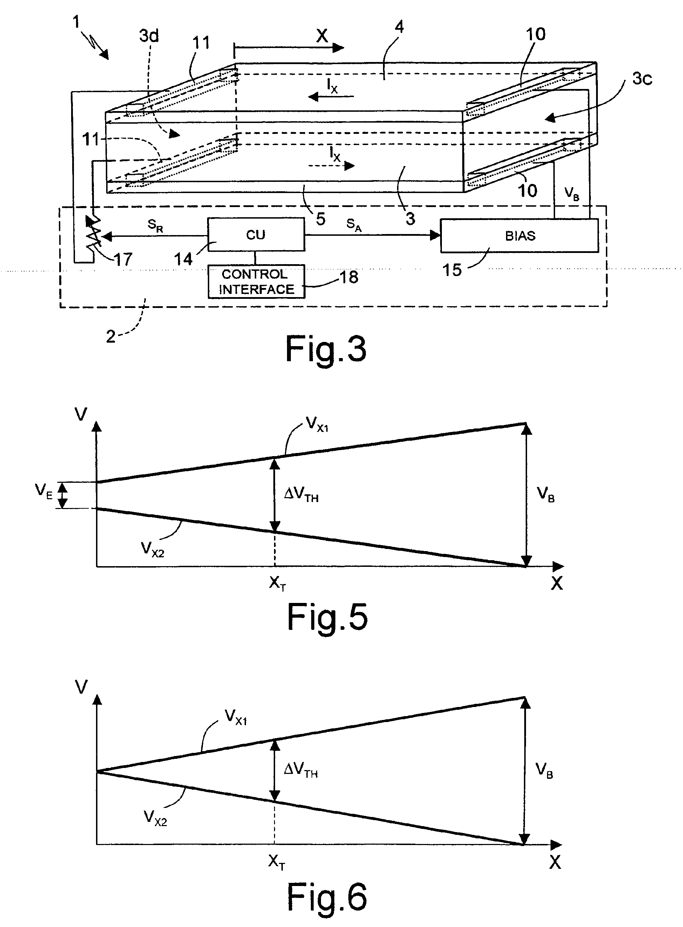

As shown in Figure 3, in which supporting layers 6, 7 and adhesive layers 8, 9 are omitted for the sake of simplicity, first and second coating 4, 5 have respective first electrodes 10 located close to a first edge 3c of sensitive layer 3; and respective second electrodes 11 located close to a second edge 3d, of sensitive layer 3, opposite first edge 3c with respect to a first axis X. First and second electrodes 10, 11 are connected to control device 2 to bias sensitive layer 3 and to control its light transmission coefficient, as explained later on.

More specifically, control device 2 comprises a control unit 14; a bias circuit 15; a potentiometer 17; and a user control interface 18 connected to control unit 14. Bias circuit 15 is connected between first electrodes 10, one of which is set to a reference voltage (ground), and is enabled by control unit 14 by means of an enabling signal S_{A}. When enabled, bias circuit 15 supplies a substantially constant, adjustable bias voltage V_{B} between first electrodes 10.

The potentiometer 17 is connected between second electrodes 11, so that first and second coating 4 and 5 are connected electrically in series; and a resistance value of potentiometer 17 is adjustable by means of a regulating signal S_{R} supplied by control unit 14. More specifically, by means of a known command (not shown) of control interface 18, the user acts on control unit 14 to generate regulating signal S_{R}.

An equivalent electric diagram of panel 1 in the steady state is shown in Figure 4, in which coatings 4, 5 and bias circuit 15 are shown schematically by resistors and a voltage source respectively (the capacitance between coatings 4, 5 is ineffective in the steady state, and is therefore not shown). When bias circuit 15 is enabled, bias voltage V_{B} is present between first electrodes 10, so that a substantially constant first current I_{X} flows through first coating 4, potentiometer 17, and second coating 5, which are connected in series. Since first electrodes 10 and second electrodes 11 are axially opposite with respect to first axis X, first current I_{X} flows in a direction substantially parallel to first axis X, and in particular flows through first and second coating 4, 5 in opposite senses (in the decreasing X sense and increasing X sense respectively). Consequently, a first and a second operating voltage V_{X1}, V_{X2} of first and second coating 4, 5 respectively vary substantially linearly along first axis X, as shown in the Figure 5 graph. More specifically, as the distance from second electrodes 11 increases (increasing X sense), first operating voltage V_{X1} increases, and second operating voltage V_{X2} decreases, so that the voltage drop ΔV_{X} between corresponding facing points of first and second coating 4, 5 also varies linearly. More specifically, at the second edge 3d of sensitive layer 3, where second electrodes 11 are located, an edge voltage V_{E} is present, and which depends on the resistance value of potentiometer 17 and is below threshold value ΔV_{XTH}. As the distance from second edge 3d increases, voltage drop ΔV_{X} increases and reaches threshold value ΔV_{XTH} at a transition distance X_{T}. At a distance greater than transition distance X_{T}, transmission coefficient T starts increasing, so that the intensity of the light transmitted through sensitive layer 3 increases gradually towards first edge 3c.

Transition distance X_{T} is obviously adjustable by appropriately adjusting the resistance value of potentiometer 17 and bias voltage V_{B}. For example (Figure 6), reducing the resistance of potentiometer 17 also reduces edge voltage V_{E}, so that transition distance X_{T} increases (towards first edge 3c). The same effect is produced by reducing bias voltage V_{B}, and the opposite effect can be produced by increasing the resistance of potentiometer 17 and bias voltage V_{B}.

The series connection of coatings 4, 5 therefore provides for locally controlling transmission coefficient T of sensitive layer 3, and in particular the gradient in a predetermined direction, so as to advantageously achieve a curtain effect with a gradual passage between a maximum-transparency condition and a dimmed condition, which does not disturb the view. The transition distance and the speed of passage are also controllable. Moreover, the panel can be used for any type of application, and is cheap and easy to produce.

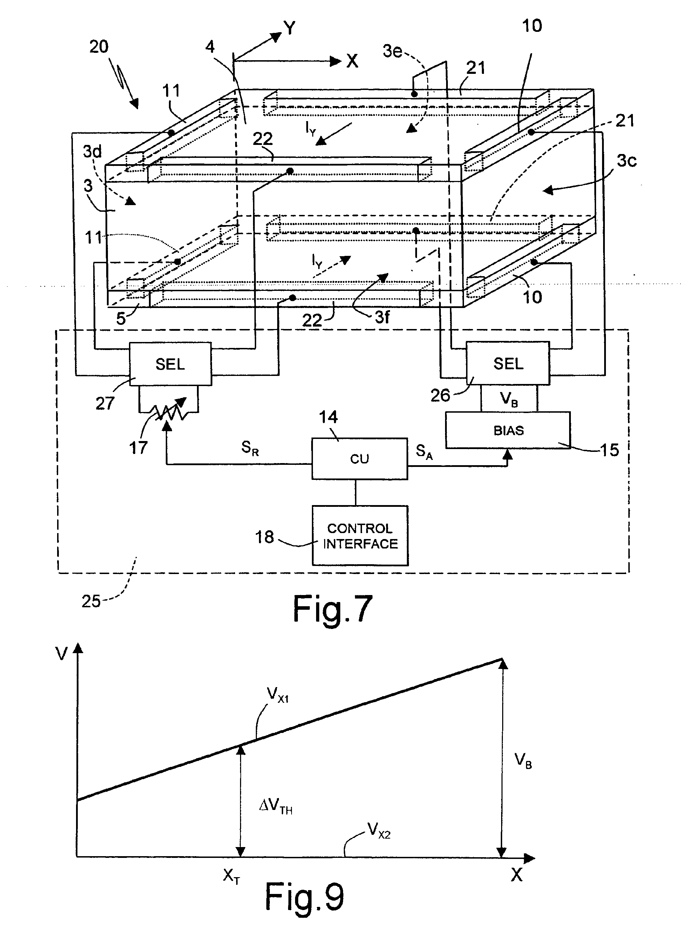

Figure 7, in which parts identical with those already shown are indicated using the same reference numbers, shows a variable light transmission panel 20 in accordance with another embodiment of the invention. More specifically, in panel 20, the first and second coating 4, 5 have respective third electrodes 21 located close to a third edge 3e; and respective fourth electrodes 22 located close to a fourth edge 3f of sensitive layer 3; and the third and fourth edge 3e, 3f of sensitive layer 3 are opposite with respect to a second axis Y perpendicular to first axis X.

Panel 20 has a control device 25 which, in addition to control unit 14, bias circuit 15, potentiometer 17, and control interface 18, also comprises a first and second selector 26, 27 controlled simultaneously by control unit 14. First selector 26 connects bias circuit 15 alternatively between first electrodes 10 and between third electrodes 21; and second selector 27 connects potentiometer 17 alternatively between second electrodes 11 and between fourth electrodes 22. More specifically, in a first case, first selector 26 connects bias circuit 15 between first electrodes 10, and second selector 27 connects potentiometer 17 between second electrodes 11, thus obtaining the same configuration as in Figure 3; and in a second case, first selector 26 connects bias circuit 15 between third electrodes 21, and second selector 27 connects potentiometer 17 between fourth electrodes 22. In the second case too, the first and second coating are therefore connected electrically in series. The bias voltage V_{B}, however, is supplied between third electrodes 21; and a second current I_{Y}, also constant, flows through first and second coating 4, 5 in a direction substantially parallel to second axis Y and in opposite senses (decreasing Y sense in first coating 4, and increasing Y sense in second coating 5), so that panel 20 advantageously provides for obtaining the curtain effect alternatively in two distinct directions, in particular perpendicular to each other.

With reference to Figure 8, in a variable light transmission panel 30, potentiometer 17 is connected between the second electrode 11 of first coating 4 and ground, while the second coating 5 is grounded and isolated from potentiometer 17. In this case, first current I_{X} only flows through first coating 4, so that (Figure 9) first operating voltage V_{X1} varies linearly along first axis X, while second operating voltage V_{X2} on second coating 5 is uniform and constant.

Clearly, changes may be made to the panel as described herein without, however, departing from the scope of the present invention. In particular, the sensitive layer may be made of material which is transparent at rest and opaque when immersed in an electric field, or of material which changes state in the presence of an electric field of predetermined direction and intensity, or in the presence of a time-variable, e.g. sinusoidal, square-wave, or otherwise variable, electric field. A selector may also be provided to connect the bias circuit to the first electrodes, and the potentiometer to the second electrodes, and alternatively to connect the bias circuit to the second electrodes, and the potentiometer to the first electrodes, thus obtaining a two-way curtain effect in the same direction.

## Claims

1. An electrically controllable light transmission panel comprising a sensitive layer (3) of material having an electrically controllable light transmission coefficient (T); a first and a second coating (4, 5) covering respective opposite faces (3a, 3b) of said sensitive layer (3), said first and said second coating (4, 5) being electrically conductive and permeable to visible light; and electric supply means (15, 17) for supplying a first current (I_{X}) through at least one of said first and said second coating (4, 5) and substantially in a predetermined first direction (X);
**characterized in that** said first and said second coating (4, 5) are connected to each other electrically in series.

2. A panel as claimed in Claim 1, **characterized in that** said electric supply means (15, 17) comprise at least one resistive element (17) connectable between said first and said second coating (4, 5).

3. A panel as claimed in Claim 2, **characterized in that** said resistive element (17) is of controllable resistance.

4. A panel as claimed in Claim 2 or 3 **characterized in that** said electric supply means comprise a bias circuit (15) connectable between said first and said second coating (4, 5) and supplying a bias voltage (V_{B}).

5. A panel as claimed in Claim 4, **characterized in that** said first and said second coating (4, 5) comprise respective first electrodes (10) connectable to said bias circuit (15), and respective second electrodes (11); said second electrodes (11) being connectable to said resistive element (17) and located with respect to said first electrodes (10) so that said first current (I_{X}) flows through said first and said second coating (4, 5) substantially in said first direction (X) and in respective opposite senses, when said first electrodes are connected to said bias circuit (15).

6. A panel as claimed in Claim 5, **characterized in that** said first electrodes (10) are located close to a first edge (3c) of said sensitive layer (3), and said second electrodes (11) are located close to a second edge (3d), of said sensitive layer (3), opposite said first edge (3c) with respect to said first direction (X).

7. A panel as claimed in Claim 6, **characterized in that** said first and said second coating (4, 5) comprise respective third electrodes (21) connectable to said bias circuit (15), and respective fourth electrodes (22); said fourth electrodes (22) being connectable to said resistive element (17) and located, with respect to said third electrodes (21), so that a second current (I_{Y}) flows through said first and said second coating (4, 5) substantially in a second direction (Y) and in respective opposite senses, when said third electrodes (21) are connected to said bias circuit (15).

8. A panel as claimed in Claim 7, **characterized in that** said third electrodes (21) are located close to a third edge (3e) of said sensitive layer (3), and said fourth electrodes (22) are located close to a fourth edge (3f), of said sensitive layer (3), opposite said third edge (3e) with respect to said second direction (Y).

9. A panel as claimed in Claim 7 or 8 **characterized in that** said second direction (Y) is substantially perpendicular to said first direction (X).

10. A panel as claimed in any one of Claims 7 to 9, **characterized by** comprising a first selector (26) for connecting said bias circuit (15) alternatively to said first electrodes (10) and to said third electrodes (21); and a second selector (27) for connecting said resistive element (17) alternatively to said second electrodes (11), when said bias circuit (15) is connected to said first electrodes (10), and to said fourth electrodes (22), when said bias circuit (15) is connected to said third electrodes (21).

11. A panel as claimed in any one of the foregoing Claims, **characterized in that** said first and said second coating (4, 5) are of uniform resistivity.

12. A panel as claimed in any one of the foregoing Claims, **characterized in that** said sensitive layer (3) is made of a material selected from the group comprising: electrochromic materials and liquid crystal materials.

13. A method of controlling a variable light transmission panel (1; 20; 30) comprising a sensitive layer (3) of material having an electrically controllable light transmission coefficient (T); a first and a second coating (4, 5) covering respective opposite faces (3a, 3b) of said sensitive layer (3), said first and said second coating (4, 5) being electrically conductive and permeable to visible light; the method comprising the step of supplying a bias voltage (V_{B}) between said first and said second coating (4, 5); wherein , during the step of supplying a bias voltage (V_{B}) , a current (I_{X}) is supplied through at least one of said first and said second coating (4, 5) and substantially in a predetermined first direction (X); **characterized by** comprising the step of connecting said first and said second coating (4, 5) to each other electrically in series.

14. A method as claimed in Claim 13, **characterized in that** said connecting step comprises using a resistive element (17).

15. A method as claimed in Claim 14, **characterized by** comprising the step of varying a resistance of said resistive element (17).

16. A method as claimed in Claim 14 or 15 **characterized in that** said bias voltage (V_{B}) is supplied between said first and said second coating (4, 5) close to a first edge (3c) of said sensitive layer; and said resistive element (17) is connected between said first and said second coating (4, 5) close to a second edge (3d), of said sensitive layer (3), opposite said first edge (3c) with respect to said first direction (X).

## Patentansprüche

1. Elektrisch steuerbare Lichttransmissionstafel, aufweisend eine sensitive Schicht (3) aus einem Material mit einem elektrisch steuerbaren Lichtdurchgangskoeffizienten (T), eine erste und eine zweite Beschichtung (4, 5), die jeweils einander gegenüber liegende Flächen (3a, 3b) der sensitiven Schicht (3) bedecken, wobei die erste und die zweite Beschichtung (4, 5) elektrisch leitend und für sichtbares Licht durchlässig sind, und eine Stromversorgung (15, 17) zum Zuführen eines ersten Stroms (Iₓ) durch mindestens eine der ersten und der zweiten Beschichtung (4, 5) und im Wesentlichen in eine vorgegebene erste Richtung (X),
**dadurch gekennzeichnet, dass** die erste und die zweite Beschichtung (4, 5) in Reihe elektrisch miteinander verbunden sind.

2. Tafel nach Anspruch 1, **dadurch gekennzeichnet, dass** die Stromversorgung (15, 17) mindestens ein Widerstandselement (17) aufweist, das zwischen die erste und die zweite Beschichtung (4, 5) geschaltet werden kann.

3. Tafel nach Anspruch 2, **dadurch gekennzeichnet, dass** das Widerstandselement (17) von regelbarem Widerstand ist.

4. Tafel nach Anspruch 2 oder 3, **dadurch gekennzeichnet, dass** die Stromversorgung eine Vorspannungsschaltung (15) aufweist, die zwischen die erste und die zweite Beschichtung (4, 5) geschaltet werden kann und die eine Vorspannung (V_{B}) liefert.

5. Tafel nach Anspruch 4, **dadurch gekennzeichnet, dass** die erste und die zweite Beschichtung (4, 5) jeweilige erste Elektroden (10), die mit der Vorspannungsschaltung (15) verbunden werden können, und jeweilige zweiten Elektroden (11) aufweist, wobei die zweiten Elektroden (11) mit dem Widerstandselement (17) verbunden werden können und in Bezug auf die ersten Elektroden (10) so angeordnet sind, dass der erste Strom (Iₓ) durch die erste und die zweite Beschichtung (4, 5) im Wesentlichen in der ersten Richtung (X) und in jeweils entgegengesetzter Weise fließt, wenn die ersten Elektroden mit der Vorspannungsschaltung (15) verbunden sind.

6. Tafel nach Anspruch 5, **dadurch gekennzeichnet, dass** die ersten Elektroden (10) nahe an einem ersten Rand (3c) der sensitiven Schicht (3) angeordnet sind und dass die zweiten Elektroden (11) nahe an einem zweiten Rand (3d) der sensitiven Schicht (3) angeordnet sind, der dem ersten Rand (3c) in Bezug auf die erste Richtung (X) gegenüber liegt.

7. Tafel nach Anspruch 6, **dadurch gekennzeichnet, dass** die erste und die zweite Beschichtung (4, 5) jeweilige dritte Elektroden (21), die mit der Vorspannungsschaltung (15) verbunden werden können, und jeweilige vierte Elektroden (22) aufweisen, wobei die vierten Elektroden (22) mit dem Widerstandselement (17) verbunden werden können und in Bezug auf die dritten Elektroden (21) so angeordnet sind, dass ein zweiter Strom (I_{Y}) durch die erste und die zweite Beschichtung (4, 5) im Wesentlichen in einer zweiten Richtung (Y) und in jeweils entgegengesetzter Weise fließt, wenn die dritten Elektroden (21) mit der Vorspannungsschaltung (15) verbunden sind.

8. Tafel nach Anspruch 7, **dadurch gekennzeichnet, dass** die dritten Elektroden (21) nahe an einem dritten Rand (3e) der sensitiven Schicht (3) angeordnet sind und dass die vierten Elektroden (22) nahe an einem vierten Rand (3f) der sensitiven Schicht (3) angeordnet sind, der dem dritten Rand (3e) in Bezug auf die zweite Richtung (Y) gegenüber liegt.

9. Tafel nach Anspruch 7 oder 8, **dadurch gekennzeichnet, dass** die zweite Richtung (Y) im Wesentlichen senkrecht auf der ersten Richtung (X) steht.

10. Tafel nach einem der Ansprüche 7 bis 9, **dadurch gekennzeichnet, dass** sie aufweist ein erstes Auswahlmittel (26), um die Vorspannungsschaltung (15) alternativ mit den ersten Elektroden (10) und den dritten Elektroden (21) zu verbinden, und ein zweites Auswahlmittel (27), um das Widerstandselement (17) alternativ mit den zweiten Elektroden (11) zu verbinden, wenn die Vorspannungsschaltung (15) mit den ersten Elektroden (10) verbunden ist, und mit den vierten Elektroden (22), wenn die Vorspannungsschaltung (15) mit den dritten Elektroden (21) verbunden ist.

11. Tafel nach einem der vorangehenden Ansprüche, **dadurch gekennzeichnet, dass** die erste und die zweite Beschichtung (4, 5) von einheitlichem spezifischen Widerstand sind.

12. Tafel nach einem der vorangehenden Ansprüche, **dadurch gekennzeichnet, dass** die sensitive Schicht (3) aus einem Material gefertigt ist, das aus der Gruppe ausgewählt ist, die elektrochrome Materialien und Flüssigkristallmaterialien umfasst.

13. Verfahren zur Steuerung einer veränderbaren Lichttransmissionstafel (1; 20; 30), die aufweist eine sensitive Schicht (3) aus einem Material mit einem elektrisch steuerbaren Lichtdurchgangskoeffizienten (T), eine erste und eine zweite Beschichtung (4, 5), welche jeweils einander gegenüber liegende Flächen (3a, 3b) der sensitiven Schicht (3) bedecken, wobei die erste und die zweite Beschichtung (4, 5) elektrisch leitend und für sichtbares Licht durchlässig sind, wobei das Verfahren den Schritt des Zuführens einer Vorspannung (V_{B}) zwischen die erste und die zweite Beschichtung (4, 5) aufweist, wobei während des Schritts des Zuführens einer Vorspannung (V_{B}) ein Strom (Iₓ) durch mindestens eine von der ersten und der zweiten Beschichtung (4, 5) und im Wesentlichen in eine vorgegebene erste Richtung (X) zugeführt wird, **gekennzeichnet durch** den Schritt des Verbindens der ersten und der zweiten Beschichtung (4, 5) in Reihe elektrisch miteinander.

14. Verfahren nach Anspruch 13, **dadurch gekennzeichnet, dass** der Verbinden-Schritt das Verwenden eines Widerstandselements (17) umfasst.

15. Verfahren nach Anspruch 14, **dadurch gekennzeichnet, dass** es den Schritt des Veränderns des Widerstands des Widerstandselements (17) umfasst.

16. Verfahren nach Anspruch 14 oder 15, **dadurch gekennzeichnet, dass** die Vorspannung (V_{B}) zwischen die erste und die zweite Beschichtung (4, 5) nahe an einem ersten Rand (3c) der sensitiven Schicht geliefert und dass das Widerstandselement (17) zwischen die erste und die zweite Beschichtung (4, 5) nahe an einem zweiten Rand (3d) der sensitiven Schicht (3) geschaltet wird, der dem ersten Rand (3c) in Bezug auf die erste Richtung (X) gegenüber liegt.

## Revendications

1. Panneau à transmission de lumière contrôlable électriquement comprenant une couche sensible (3) en un matériau ayant un coefficient de transmission de lumière contrôlable électriquement (T) ; un premier et un second revêtement (4, 5) couvrant des faces opposées respectives (3a, 3b) de ladite couche sensible (3), ledit premier et ledit second revêtement (4, 5) étant électriquement conducteurs et perméables à la lumière visible ; et des moyens d'alimentation électrique (15, 17) permettant de délivrer un premier courant (I_{X}) à travers au moins un revêtement parmi ledit premier et ledit second revêtement (4, 5) et sensiblement dans une première direction prédéterminée (X) ;
**caractérisé en ce que** ledit premier et ledit second revêtement (4, 5) sont connectés électriquement l'un à l'autre en série.

2. Panneau selon la revendication 1, **caractérisé en ce que** lesdits moyens d'alimentation électrique (15, 17) comprennent au moins un élément résistif (17) pouvant être connecté entre ledit premier et ledit second revêtement (4, 5).

3. Panneau selon la revendication 2, **caractérisé en ce que** ledit élément résistif (17) a une résistance contrôlable.

4. Panneau selon la revendication 2 ou 3, **caractérisé en ce que** lesdits moyens d'alimentation électrique comprennent un circuit de polarisation (15) pouvant être connecté entre ledit premier et ledit second revêtement (4, 5) et délivrant une tension de polarisation (V_{B}).

5. Panneau selon la revendication 4, **caractérisé en ce que** ledit premier et ledit second revêtement (4, 5) comprennent des premières électrodes respectives (10) pouvant être connectées audit circuit de polarisation (15) et des deuxièmes électrodes respectives (11) ; lesdites deuxièmes électrodes (11) pouvant être connectées audit élément résistif (17) et étant situées, par rapport auxdites premières électrodes (10), de telle façon que ledit premier courant (I_{X}) circule à travers ledit premier et ledit second revêtement (4, 5) sensiblement dans ladite première direction (X) et dans des sens opposés respectifs, quand lesdites premières électrodes sont connectées audit circuit de polarisation (15).

6. Panneau selon la revendication 5, **caractérisé en ce que** lesdites premières électrodes (10) sont situées près d'un premier bord (3c) de ladite couche sensible (3) et lesdites deuxièmes électrodes (11) sont situées près d'un deuxième bord (3d) de ladite couche sensible (3), à l'opposé dudit premier bord (3c) par rapport à ladite première direction (X).

7. Panneau selon la revendication 6, **caractérisé en ce que** ledit premier et ledit second revêtement (4, 5) comprennent des troisièmes électrodes respectives (21) pouvant être connectées audit circuit de polarisation (15) et des quatrièmes électrodes respectives (22) ; lesdites quatrièmes électrodes (22) pouvant être connectées audit élément résistif (17) et étant situées, par rapport auxdites troisièmes électrodes, de telle façon qu'un second courant (I_{Y}) circule à travers ledit premier et ledit second revêtement (4, 5) sensiblement dans une seconde direction (Y) et dans des sens opposés respectifs, quand lesdites troisièmes électrodes (21) sont connectées audit circuit de polarisation (15).

8. Panneau selon la revendication 7, **caractérisé en ce que** lesdites troisièmes électrodes (21) sont situées près d'un troisième bord (3e) de ladite couche sensible (3) et lesdites quatrièmes électrodes (22) sont situées près d'un quatrième bord (3f) de ladite couche sensible (3), à l'opposé dudit troisième bord (3e) par rapport à ladite seconde direction (Y).

9. Panneau selon la revendication 7 ou 8, **caractérisé en ce que** ladite seconde direction (Y) est sensiblement perpendiculaire à ladite première direction (X).

10. Panneau selon l'une quelconque des revendications 7 à 9, **caractérisé en ce qu'**il comprend un premier sélecteur (26) permettant de connecter ledit circuit de polarisation (15) alternativement auxdites premières électrodes (10) et auxdites troisièmes électrodes (21) ; et un second sélecteur (27) permettant de connecter ledit élément résistif (17) alternativement auxdites deuxièmes électrodes (11), quand ledit circuit de polarisation (15) est connecté auxdites premières électrodes (10), et auxdites quatrièmes électrodes (22), quand ledit circuit de polarisation (15) est connecté auxdites troisièmes électrodes (21).

11. Panneau selon l'une quelconque des revendications précédentes, **caractérisé en ce que** ledit premier et ledit second revêtement (4, 5) ont une résistivité uniforme.

12. Panneau selon l'une quelconque des revendications précédentes, **caractérisé en ce que** ladite couche sensible (3) est réalisée en un matériau choisi dans le groupe comprenant des matériaux électrochimiques et des matériaux à cristaux liquides.

13. Procédé de contrôle d'un panneau à transmission de lumière variable (1 ; 20 ; 30) comprenant une couche sensible (3) en un matériau ayant un coefficient de transmission de lumière contrôlable électriquement (T) ; un premier et un second revêtement (4, 5) couvrant des faces opposées respectives (3a, 3b) de ladite couche sensible (3), ledit premier et ledit second revêtement (4, 5) étant électriquement conducteurs et perméables à la lumière visible ; le procédé comprenant l'étape consistant à délivrer une tension de polarisation (V_{B}) entre ledit premier et ledit second revêtement (4, 5) ; dans lequel, au cours de l'étape de délivrance d'une tension de polarisation (V_{B}), un courant (I_{X}) est délivré à travers au moins un revêtement parmi ledit premier et ledit second revêtement (4, 5) et sensiblement dans une première direction prédéterminée (X) ;
**caractérisé en ce qu'**il comprend l'étape consistant à connecter ledit premier et ledit second revêtement (4, 5) électriquement l'un à l'autre en série.

14. Procédé selon la revendication 13, **caractérisé en ce que** ladite étape de connexion comprend l'utilisation d'un élément résistif (17).

15. Procédé selon la revendication 14, **caractérisé en ce qu'**il comprend l'étape consistant à faire varier une résistance dudit élément résistif (17).

16. Procédé selon la revendication 14 ou 15, **caractérisé en ce que** ladite tension de polarisation (V_{B}) est délivrée entre ledit premier et ledit second revêtement (4, 5) près d'un premier bord (3c) de ladite couche sensible ; et ledit élément résistif (17) est connecté entre ledit premier et ledit second revêtement (4, 5) près d'un deuxième bord (3d) de ladite couche sensible (3), à l'opposé dudit premier bord (3c) par rapport à ladite première direction (X).
